# EUROPÄISCHE PATENTSCHRIFT

(11) **EP 0 871 335 B1**
(45) Veröffentlichungstag und Bekanntmachung des Hinweises auf die Patenterteilung: **16.08.2006**
(21) Anmeldenummer: 98103775.7
(22) Anmeldetag: 04.03.1998
(51) Int. Cl.: H04N 7/30

(54) **Formadaptive Transformationskodierung von Bilddaten**
Shape adaptive transform coding of image data
Codage de données d'image par une transformation adaptive aux formes

(30) Priorität: 08.04.1997 DE 19714406
(43) Veröffentlichungstag der Anmeldung: 14.10.1998
(73) Patentinhaber: ROBERT BOSCH GMBH, 70442 Stuttgart (DE)
(72) Erfinder: Kauff, Peter, 10711 Berlin (DE); Sikora, Thomas, 10823 Berlin (DE); Schueuer, Klaas, 12309 Berlin (DE)

(56) Entgegenhaltungen:
- SUSUMU ITOH ET AL: "ADAPTIVE TRANSFORM CODING OF IMAGES BASED ON VARIABLE-SHAPE-BLOCKS*" PROCEEDINGS OF THE EUROPEAN SIGNAL PROCESSING CONFERENCE (EUSIPCO),NL,AMSTERDAM, ELSEVIER, Bd. CONF. 6, 24. August 1992 (1992-08-24), Seiten 1251-1254, XP000356468
- SIKORA T: "Low complexity shape-adaptive DCT for coding of arbitrarily shaped image segments" SIGNAL PROCESSING. IMAGE COMMUNICATION,NL,ELSEVIER SCIENCE PUBLISHERS, AMSTERDAM, Bd. 7, Nr. 4, 1. November 1995 (1995-11-01), Seiten 381-395, XP004047090 ISSN: 0923-5965
- KAUFF P ET AL: "An extension of shape-adaptive DCT (SA-DCT) towards DC separation and Delta DC correction" PROCEEDINGS OF THE PICTURE CODING SYMPOSIUM,XX,XX, Nr. 143, 10. September 1997 (1997-09-10), Seiten 647-652, XP002077333

## Beschreibung

### Stand der Technik

Die Erfindung geht aus von einer Schaltungsanordnung für die Fernsehübertragung, die mit orthogonalen, vorzugsweise aber mit orthonormalen Basisfunktionen korrelierte Transformationskoeffizienten für transformationskodierte digitale Bilddaten verwendet.

Aus der Veröffentlichung Susumu Itoh et al: "Adaptive transform coding of images based on variable-shape-blocks", Proceedings of the European Signal Processing Conference (EUSIPCO), NL, Amsterdam, Elsevier, Band Conf. 6, 24 August 1992 (1992-08-24), Seiten 1251 bis 1254 ist eine Schaltungsanordnung für eine Bildübertragung bekannt, die mit vorzugsweise orthonormalen Basisfunktionen korrelierte Transformationskoeffizienten für transformationskodierte digitale Bilddaten verwendet, wobei ein Bild mittels Bildelementen aufgebaut ist, die zwecks segmentadaptiver zweidimensionaler orthonormaler Transformation in Blöcken variabler Größe organisiert sind und Informationen über Helligkeit und deren Änderung im Vergleich zu umgebenden Bildelementen in Form von Gleich- und Wechselanteil enthalten, wobei eine Reihenschaltung aus einem vorgeschalteten Separierer (100) für Gleich- und Wechselanteil der Bildelemente, ein Transformator (200) für den Wechselanteil, und ein Quantisierer für den Gleichanteil vorgesehen ist.

Aus der Offenlegungsschrift DE 4437827 A1 ist eine Schaltungsanordnung bekannt, mit der beliebig geformte Bildsegmente für die Übertragung in Fernsehsystemen kodiert werden können und die den Rechenwand auf ein mit konventioneller, blockorientierter DCT vergleichbares Maß beschränkt. Als Fernsehsysteme sind solche Systeme zu verstehen, die für die Übertragung und Wiedergabe von willkürlich zusammengesetzten Bildern dienen, in denen die örtliche, den jeweiligen Bildinhalt charakterisierenden Lichtveränderungen sich auch mit der Zeit verändern können, z.B. Systeme für die direkte Übertragung oder für die Aufzeichnung und zeitlich und/oder örtlich versetzte Wiedergabe von Szenen. Dabei läßt sich durch die Verwendung von Transformationskodierungen digitaler Bilddaten der benötigte Bandbreitenbedarf erheblich reduzieren. Durch die Anordnung von Sortierern, Substituierern und Positionschiebern in Kombination mit orthogonalen eindimensionalen Transformationen ermöglicht die dort dargelegte Schaltungsanordnung, die ansonsten sehr komplexe, formabhängige zweidimensionale Transformation in separate eindimensionale Teiltransformationen aufzuteilen, wobei die willkürlichen geometrischen Formen zeilen- und spaltenweise separat, d.h. als Reihen der Einheitsbreite 1 mit willkürlicher Länge, transformiert werden. Für alle vorkommenden Längen werden dabei fest definierte, orthogonale Basisfunktionen als Transformationsmatrizen bereitgestellt, die für alle Zeilen und Spalten der Einheitsbreite 1 gelten, so daß für diese unabhängig voneinander und adaptiv bezüglich ihrer Länge und damit der geometrischen Form in der betreffenden Richtung die Transformation als Tabellenoperation stattfinden kann. Damit beschränkt sich die Schaltungsanordnung aus der DE 4437827 A1 auf einfache und aufwandsarme Maßnahmen, die sich an den Schaltungselementen konventioneller, blockorientierter Transformationskodierer orientieren. Sie kann deshalb durch eine geringfügige Modifikation konventioneller Schaltungsanordnungen zur blockorientierten Transformation und mit vergleichbar geringem Mehraufwand realisiert werden.

Die Schaltungsanordnung der DE 4437827 A1 weist hinsichtlich der Auswahl der verwendbaren Basisfunktionen eine nicht unwesentliche Einschränkung auf, die dadurch begründet ist, daß die gewählten Basisfunktionen gleichermaßen auf den Gleich- und den Wechselanteil der zu transformierenden Bilddaten angewendet werden. Eine Optimierung hinsichtlich der Leistungsfähigkeit dieser Schaltungsanordnung im Sinne der Kodiereffizienz hängt dabei entscheidend vom Gleichanteil, d.h. dem Mittelwert der zu transformierenden Bilddaten ab. Insbesondere im Fall von mittelwertbehafteten Bilddaten - d.h. Bilddaten, die einen Gleichanteil aufweisen, der sich signifikant von Null unterscheidet - muß eine bestimmte Klasse von orthogonalen, aber nichtorthonormalen Basisfunktionen verwendet werden, da ansonsten stark störende, formabhängige Verzerrungen des Gleichanteils auftreten können.

In den voranstehenden Erläuterungen steht der Begriff der Orthogonalität für eine mathematisch notwendige Bedingung, die von den bei der Transformation verwendeten Basisfunktionen in jedem Fall erfüllt werden muß. Die Orthonormalität stellt dagegen eine weitere einschränkende Eigenschaft hinsichtlich einer Normierung der Basisfunktionen dar, die sich in der Regel positiv auf die Leistungsfähigkeit im Sinne der Kodiereffizienz, d.h. der bestmöglichen Bandbreitenreduktion bei gleichbleibender Bildqualität, auswirkt, weshalb in der konventionellen Transformationskodierung bevorzugt orthonormale Basisfunktionen verwendet werden. Dabei gilt, daß orthonormale Basisfunktionen immer auch orthogonal sind. Umgekehrt sind orthogonale Basisfunktionen aber nicht zwangsläufig auch orthonormal.

### Vorteile der Erfindung

Die erfindungsgemäße Schaltungsanordnung mit den kennzeichenden Merkmalen des Hauptanspruchs weist demgegenüber den Vorteil auf, daß durch eine aufwandsarme Erweiterung der bekannten Schaltungsanordnung gemäß DE 4437827 A1 alle Vorzüge dieser Schaltungsanordnung beibehalten werden, und zusätzlich die Beschränkung hinsichtlich der Verwendung orthonormaler Basisfunktionen behoben wird, so daß zwecks einer Optimierung der Schaltungsanordnung, hinsichtlich ihrer Leistungsfähigkeit im Sinne der Kodiereffizienz, unabhängig vom Gleichanteil und damit vom Mittelwert des zu transformierenden Bilddaten immer auch orthonormale Basisfunktionen verwendet werden können.

Die erfindungsgemäße Lösung hierzu sieht einerseits vor, bei einer Schaltungsanordnung der eingangs genannten Art eine Reihenschaltung aus einer vorgeschalteten, zwei parallel geschalteten und einer nachgeschalteten Signalverarbeitungssektion(en) zu verwenden, wobei: a): in der vorgeschalteten Sektion eine segmentadaptive Separation der zu verarbeitenden Bilddaten in Gleich- und Wechselanteil vorgenommen wird und hierzu mittels eines Akkumulators, eines Zählers sowie eines Dividierers zuerst für jedes Abbildsegment adaptiv ein den Gleichanteil repräsentierender Mittelwert bestimmt und dann zwecks Bestimmung des Wechselanteils dieser Mittelwert von den zu verarbeitenden Bilddaten subtrahiert wird und
b): in einer der beiden parallelgeschalteten Signalverarbeitungssektionen die als mittelwertfreier Wechselanteil erhaltenen Bilddaten unter Verwendung der vorbekannten Schaltung transformiert werden und dabei aufgrund der mittelwertfreien Eingangsdaten zwecks einer Optimierung im Sinne der Kodiereffizienz immer auch orthonormale Basisfunktionen verwendet werden können
c): in der anderen parallelgeschalteten Signalverarbeitungssektion der zuvor bestimmte, den Gleichanteil repräsentierende Mittelwert über einen aus der Größe des eingangsseitigen Abbildsegmentes und der jeweils bei der Transformation verwendeten Klasse von Basisfunktionen abzuleitenden Skalierungsfaktor derart umdefiniert wird, daß er zum Wertebereich der Transformationskoeffizienten des Wechselanteils paßt
d): in der nachgeschaltete Signalverarbeitungsektion unter Verwendung eines Demultiplexers, eines Substituierers und eines Multiplexers ein bestimmter, redundanter Transformationskoeffizienten des Wechselanteils dergestalt durch den zuvor umskalierten Mittelwert ersetzt wird, daß sich danach ein kodierbarer Datensatz ergibt, der die gleiche äußere Erscheinungsform aufweist wie bei einer Schaltungsanordnung nach DE 4437827 A1.

Durch die in den Unteransprüchen aufgeführten Maßnahmen sind vorteilhafte Weiterbildungen und Verbesserungen der im Hauptanspruch angegebenen Schaltungsanordnung möglich.

Eine Besonderheit der zuvor beschriebenen, erfindungsgemäßen Lösung besteht darin, daß der in der nachgeschalteten Signalverarbeitungssektion durch den umskalierten Mittelwert ersetzte Transformationskoeffizient des Wechselanteils auf der Wiedergabeseite nicht mehr für die Rekonstruktion darstellbarer Abbilder zur Verfügung steht. Es kann gezeigt werden, daß dieser spezielle Transformationskoeffizient redundante Information enthält, die ausschließlich von der geometrischen Form des jeweiligen Abbildsegmentes und der bei der Transformation verwendeten Klasse von Basisfunktionen abhängt. Die sendeseitige Vernachläßigung dieses einen redundanten Koeffizienten bewirkt daher auf der Wiedergabeseite nur eine systematische, in Form einer örtlichen Mittelwertschwankung auftretenden Störung, die dort unter Kenntnis der geometrischen Segmentform und der verwendeten Klasse von Basisfunktionen immer auch wieder korrigiert werden kann.

Aus diesem Grund sieht die erfindungsgemäße Lösung des weiteren vor, daß bei eine Schaltungsanordnung zur Rekonstruktion darstellbarer Abbilder, die gemäß der zuvor beschriebenen, sendeseitigen Schaltungsanordnung kodiert wurden, eine der vier Signalverarbeitungssektionen, die ansonsten auf der Wiedergabeseite in umgekehrter Reihenfolge zur sendeseitigen Schaltungsanordnung angeordnet und für den jeweiligen inversen Betrieb ausgelegt sind, noch eine zusätzliche Schaltung aufweist, die mittels eines Akkumulators, eines Zählwerks und eines Korrelators eine Korrektur der oben genannten, systematischen örtlichen Mittelwertschwankungen vornimmt.

Ein wichtiger Vorteil der erfindungsgemäßen, sende- und wiedergabeseitigen Schaltungserweiterungen besteht darin, daß die Datensätze am Eingang und am Ausgang der jeweiligen Schaltungsanordnung die gleichen äußeren Erscheinungsformen aufweisen wie bei den entsprechenden sende- und wiedergabeseitigen Schaltungsanordnungen gemäß Offenlegungsschrift DE 4437827 A1. Die erweiterten Schaltungsanordnungen sind somit kompatibel mit den herkömmlichen Schaltungsanordnungen und können deshalb sowohl auf der Sende- als auch der Wiedergabeseite gegen diese ausgetauscht werden, ohne dabei die externe Signalverarbeitung eines bestehenden Kodiersystems ändern zu müssen. Die vorgenommen Erweiterungen beschränken sich im wesentlichen auf eine interne, kurzzeitige und in sich abgeschlossene Separation der zu verarbeitenden Bilddaten in Gleich- und Wechselanteil, um so die Schaltungsanordnung DE 4437827 A1 ausschließlich auf mittelwertfreie Signalanteile anwenden zu können und dadurch zu ermöglichen, daß man zwecks einer Optimierung der Schaltungsanordnung im Sinne der Kodiereffizienz immer auch orthonormale Basisfunkionen einsetzen kann. Mit Hilfe von Computersimulationen konnte nachgewiesen werden, daß durch diese zusätzlichen Maßnahmen und den damit ermöglichten, uneingeschränkten Einsatz orthonormaler Basisfunktionen im Vergleich zur herkömmlichen Schaltungsanordnung erhebliche Kodiergewinne erzielt werden können. Als weiteres positives Merkmal der erfindungsgemäßen, sende- und wiedergabeseitigen Schaltungserweiterungen ist zu werten, daß alle Vorteile der herkömmlichen Schaltungsanordnung beibehalten werden. Dies gilt insbesondere auch für den als vergleichsweise sehr gering einzuordnenden Realisierungsaufwand. Der Mehraufwand, der durch die erfindungsgemäßen Schaltungserweiterungen erforderlich wird, ist dabei unerheblich, da hierzu nur wenige, elementare Schaltungselemente, wie Akkumulatoren, Zähler, Addierer, Subtrahierer, Multiplizierer, Dividierer, Multiplexer, Demultiplexer und Korrelatoren benötigt werden, die zum Teil schon in der bekannten Schaltungsanordnung der DE 4437827 A1 vorhanden sind und deshalb mittels einer Mehrfachnutzung ggf. auch für eine Aufwandsminimierung eingesetzt werden können.

### Zeichnung

Besonders vorteilhafte Ausführungsformen der Erfindung sind in den Zeichnugen dargestellt und werden in der nachfolgenden Beschreibung näher erläutert. Dabei zeigen:
Fig. 1 einen Ablaufplan für eine sendeseitige Schaltungsanordnung;
Fig. 2 ein Blockschaltbild einer sendeseitigen Schaltungsanordnung für ein Fernsehsystem gemäß der Erfindung;
Fig. 3 ein Schaubild der sich in einzelnen Stufen einer gemäß Fig. 1 ablaufenden Schaltungserweiterung ergebenden Bildaten;
Fig. 4 ein Ablaufplan für eine wiedergabeseitige Schaltungsanordnung.
Fig. 5 ein Blockschaltbild einer wiedergabeseitigen Schaltungsanordnung für ein Fernsehsystem gemäß der Erfindung.

### Beschreibung des Ausführungsbeispiels

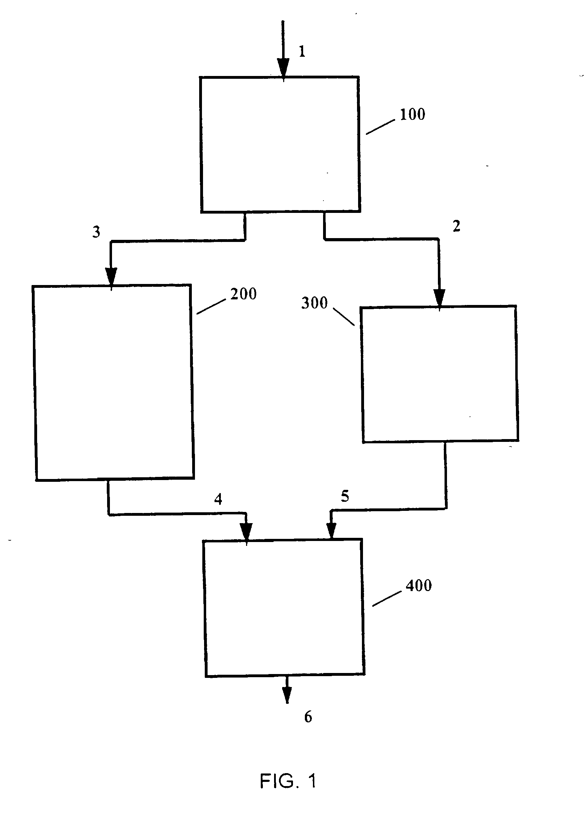

Fig. 1 zeigt schematisch eine sendeseitige Schaltungsanordnung. Ein Separator 100 ist mit einer zweidimensionalen Transformator 200 und einem Gleichanteil-Gleichanteil-Skalierer 300 verbunden, wobei der Ausgang des Tranformators 200 und der Ausgang des Skalierers 300 mit dem Eingang eines Multiplexers 400 in Verbindung stehen.

Die dargestellte Schaltung veranschaulicht in einer schematischen Systemübersicht die Untergliederung einer sendeseitigen Schaltungsanordnung für eine zweidimensionale orthogonale, vorzugsweise orthonormale Basisfunktionen verwendende Transformation digitaler Bilddaten. Im den Schaltungsteilen wird im Separator 100, jeweils eine segmentadaptive Separation in Gleich- und Wechselanteil vorgenommen, im Transformator 200 eine zweidimensionale formadaptive Transformation der als Wechselanteil erhaltenen Bilddaten, im Gleichanteil-Skalierer 300 eine separate, ggf. adaptive Skalierung des Gleichanteils und im Multiplexer 400 eine abschließende Zusammenfügung der aus den vorangegangenen Sektion hervorgegangenen Daten zu einem gemeinsam kodierbaren Datensatz durchgeführt.

Der zu verarbeitende Datensatz 1 eines zweidimensionalen Abbildsegmentes willkürlicher geometrischer Form besteht aus den digitalen Daten der Bildelemente - oder Pixel - mit deren Luminanz- oder Luminanz/Chromimanzwerten. In dem vorgeschalteten Separierer 100 wird der zu verarbeitenden Datensatz segmentadaptiv in Gleich- und Wechselanteil getrennt. Der Gleichanteil besteht dabei aus einem einzigen, ortsunabhängigen Mittelwert 2, der für jedes Segment neu bestimmt wird. Die als Wechselanteil erhaltenen Daten bilden dagegen einem Datensatz 3, der die gleiche geometrische Erscheinungsform aufweist wie der initiale Datensatz 1, im Gegensatz zu 1 aber mittelwertfrei ist. Die beiden, in dieser Form separierten Signalanteile werden anschließend in zwei parallelen Schaltungsteilen 200 und 300 unabhängig voneinander weiterverarbeitet. Dabei sieht der Transformator 200 unter Verwendung einer Schaltungsanordnung gemäß DE 4437827 A1 eine zweidimensionale, formadaptive Transformation des Datensatzes 3 vor, bei der aufgrund der mittelwertfreien Eingangsdaten vorzugsweise immer auch orthonormale Basisfunktionen verwendet werden können. Das Ergebnis dieser Transformation ist eine Datensatz 4, der den Wechselanteil mittels Transformationskoeffizienten repräsentiert. In dem parallel geschalteten Gleichanteil-Skalierer 300 wird der den Gleichanteil repräsentierende Mittelwert 2 über einen ggf. adaptiv zu bestimmenden Skalierungsfaktor dergestalt umdefiniert, daß der daraus resultierende, umskalierte Mittelwert, im weiteren als DC-Koeffizient 5 bezeichnet, wieder zu den Transformationskoeffizienten des Wechselanteils paßt. Im nachgeschalteten Multiplexer 400 werden die Transformationskoeffizienten des Wechselanteils 4 und der in skalierter Form den Gleichanteil repräsentierende DC-Koeffizient 5 zwecks gemeinsamer Kodierung in geeigneter Form über einen Multiplexer zu einem kodierbaren Datensatz 6 zusammengefaßt. Unter geeigneter Form ist dabei zu verstehen, daß dieser Datensatz 6 die gleiche äußere Erscheinungsform aufweist und damit die gleiche Anzahl an zu kodierenden Koeffizienten enthält wie eine vergleichbarer Datensatz, der entsteht, wenn man den eingangsseitigen Datensatz direkt, d.h. ohne Trennung in Gleich- und Wechselanteil, mit einer Schaltungsanordnung gemäß der DE 4437827 A1 verarbeitet.

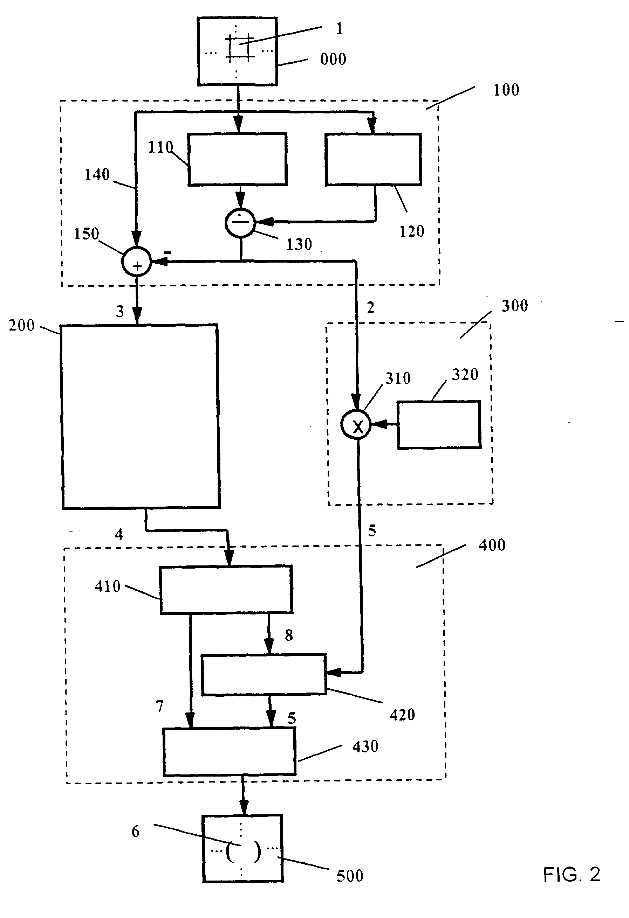

Fig.2 zeigt die aus Fig.1 bekannte Schaltungsanordnung aus Separierer 100, Transformator 200, Gleichanteil-Skalierer 300 und Multiplexer 400. Eingangsseitig ist im Separierer 100 ein Akkumulator 110 und parallel dazu ein Zähler 120 angeschlossen, deren Ausgänge auf einen Dividierer 130 führen. Der Ausgang des Dividierers 130 liegt sowohl am Eingang eines Subtrahierers 150 , als auch am Eingang des Gleichanteil-Skalierers 300 an. Der zweite Eingang 140 des Subtrahierers zweigt vom Eingangsanschluß ab, während der Ausgang des Subtrahierers am Eingang des Transformators anliegt. Der Gleichanteil-Skalierer 300 enthält einen Multiplizierer 310, der einen Eingang für den Skalierungsfaktor 320 aufweist.

Im Multiplexer 400 ist der Eingang 4 an einen Demultiplexer 410 angeschlossen. Der Eingang 5 liegt an einem Substituierer 420 an, der mit dem Demultiplexer eingangsseitig und mit einem internen Multiplexer 430 ausgangsseitig verbunden ist. Der interne Multiplexer 430 ist zudem eingangsseitig mit dem Demultiplexer 410 und ausgangsseitig mit der Kodiereinrichtung 500 verbunden.

Aus dem in Fig. 2 dargestellten Blockschaltbild einer sendeseitigen Schaltungsanordnung für eine Fernsehsystem gemäß der Erfindung ist zu entnehmen, daß jeder Datensatz 1 eines willkürlich geformten Segmentes eines Abbildes, das eine Fernsehkamera, ein Bildspeicher, eine Magnetbandkassette oder dgl. liefert und auf einem Bildschirm 000 darstellbar ist, jeweils in einen kodierbaren, aus Transformationskoeffizienten bestehenden Datensatz 6 umgewandelt wird, der dann in einer Kodiereinrichtung genauso weiterverarbeitet werden kann wie bei einer herkömmlichen Schaltungsanordnung gemäß der DE 4437827 A1.

Im Separierer 100 wird für jeden Datensatz 1 über einen verzweigten Pfad mit einem Akkumulator 110 in einem Zweig und einem Zähler 120 in dem anderen Zweig sowie einem Dividierer 130 im Verzweigungspunkt zuerst der Mittelwert 2 der zu verarbeitenden Daten bestimmt. Der Akkumulator 110, der für jeden zu verarbeitenden Datensatz 1 zunächst auf Null zurückgesetzt wird, summiert alle Werte der im Datensatz 1 enthaltenen Bilddaten auf. Parallel dazu ermittelt der Zähler 120 die Anzahl der im Akkumulator aufsummierten Werte. Sobald der Datensatzes 1 vollständig erfaßt ist, wird über den Dividierer 130 der Mittelwert 2 bestimmt, der zugleich den Gleichanteil des zu verarbeitenden Datensatzes 1 darstellt.Hierzu wird die im Akkumulator 110 registrierte Gesamtsumme durch die vom Zähler 120 ermittelte Gesamtanzahl dividiert. In einer weiteren Komponente des Separators 100, dem Subtrahierer 150, wird dann der Wechselanteil des Datensatzes 1 berechnet. Zu diesen Zweck wird der zuvor bestimmte Mittelwert 2 von allen Werten der in 1 enthaltenen Daten, die dem Subtrahierer 150 über eine schlichte, ggf. zwecks Rechenzeitkompensation mit einem Verzögerungsglied ausgestatteten Verbindungsleitung 140 zugeführt werden, subtrahiert. Das Ergebnis dieser Subtraktion ist ein modifizierter Datensatz 3, der die als Wechselanteil erhaltenen Bilddaten zusammenfaßt.

Die auf diese Weise separierten, durch 2 und 3 gekennzeichneten Signalanteile werden in den nachfolgenden, parallelen Komponenten, dem Transformator 200 und dem Gleichanteil-Skalierer 300 unabhängig voneinander weiterverarbeitet. Der Transformator 200 vollzieht dabei eine zweidimensionale, formadaptive Transformation des den Wechselanteil beschreibenden Datensatzes 3 in einen korrespondierenden Datensatz 4 der die den Wechselanteil repräsentierenden Transformationskoeffizienten enthält. Zu diesem Zweck wird die Schaltungsanordnung aus der DE 44 37 827 A1 verwendet, wobei aufgrund der mittelwertfreien Eingangsdaten vorzugsweise immer auch orthonormale Basisfunktionen eingesetzt werden können. Der parallele Gleichanteil-Skalierer 300, der die separate Weiterverarbeitung des Gleichanteils übernimmt, besteht aus einem einfachen Zweig mit einem Multiplizierer 310, durch den der Mittelwert 2 über einen ggf. adaptiv zu bestimmenden Skalierungsfaktor 320 derart umdefiniert wird, daß der daraus resultierende, skalierte Mittelwert, hier als DC-Koeffizient 5 bezeichnet, nach der Skalierung zum Wertebereich der Transformationskoeffizienten des Wechselanteils paßt. Der hierzu benötigte Skalierungsfaktor 320 ist sowohl aus der im Transformator 200 verwendeten Klasse von Basisfunktionen als auch der Grösse des zum Datensatz 1 gehörenden Abbildsegmentes abzuleiten. Sofern im Transformator 200 immer die gleiche Klasse von Basisfunktionen verwendet wird und darüber hinaus für den eingangsseitigen Datensatz 1 eine maximale Blockgröße festgelegt ist (z.B. 8 x 8 Bildpunkte in herkömmlichen Kodierstandards), kann der Skalierungsfaktor 320 auf eine konstanten Wert voreingestellt werden. Eine Adaption des Skalierungsfaktors 320 wird dagegen insbesondere dann erforderlich, wenn ein Kodiersystem entweder mit unterschiedlichen Klassen von Basisfunktionen oder variabler, maximaler Blockgrösse arbeitet oder man bewußt eine Anpassung des Skalierungsfaktors an die jeweilige Grösse des eingangsseitigen Abbildsegmentes erreichen will.

Im Multiplexer 400 wird der in skalierter Form den Gleichanteil repräsentierende DC-Koeffizient 5 mit dem, die Transformationskoeffzienten des Wechselanteils enthaltenden Datensatz 4 zu einem endgültigen, gemeinsam kodierbaren Datensatz 6 zusammengefügt. Um diesen Multiplexvorgang in gewünschter Form durchführen zu können, wird im Multiplexer 400 zuerst ein redundan-ter Transformationskoeffizient des Wechselanteils, im folgenden als ΔDC -Koeffizient 8 bezeichnet, über einen Demultiplexer 410 von den restlichen Transformationskoeffizienten des Wechselanteils getrennt. Der ΔDC -Koeffizient 8 wird dann über den Substituierer 420 durch den in skalierter Form den Gleichanteil repräsentierenden DC-Koeffizienten 5 ersetzt, der abschließend mit dem die restlichen Transformationskoeffizienten enthaltenden Datensatz 7 über den Multiplexer 430 zu einem kodierbaren Datensatz 6 zusammengefügt wird. Wie bereits erwähnt, kann dieser Datensatz 6 in einer nachfolgenden Kodiereinrichtung 500 genauso weiterverarbeitet werden wie bei einer herkömmlichen Schaltungsanordnung.

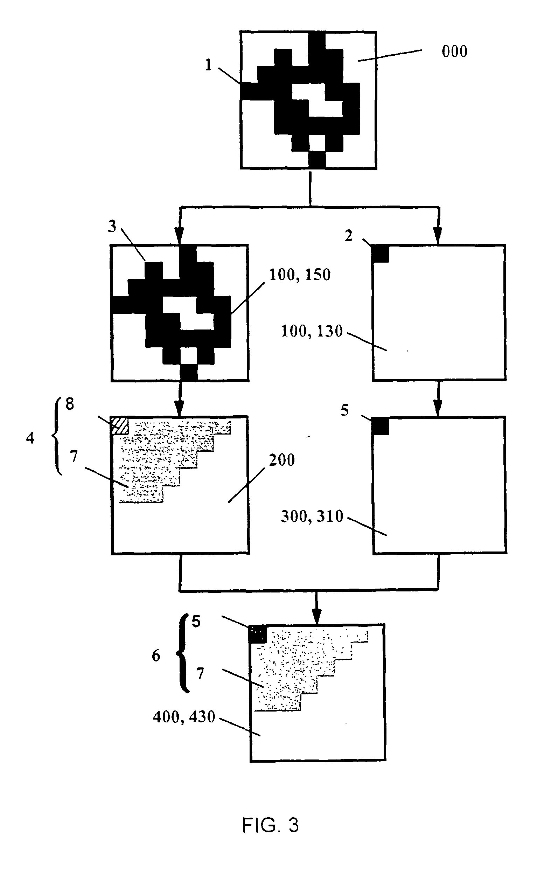

Fig. 3 zeigt zur genaueren Definition des oben erwähnten, durch den DC-Koeffizienten ersetzten und im finalen Datensatz 6 nicht mehr berücksichtigten ΔDC-Koeffizienten 8 in einem Schaubild einige beispielhafte Erscheinungsformen, in denen einige Komponenten der Schaltungsanordnung gemäß Fig.1 und insbesondere Fig.2 ihre Ergebnisse liefern. In Fig. 3 sind diese Erscheinungsformen mit denselben Bezugsziffern versehen wie die in Fig. 2 gezeigten, die betreffenden Ergebnisse liefernden Komponenten der Schaltungsanordnung.

Ein Abbildsegment 000, in dem - entsprechend einer bevorzugten Ausführungsform der Erfindung - die dem Segment angehörenden Bildelemente in quadratischen Blöcken organisiert sind, hat beispielsweise die durch schwarze Bildelemente 1 angegebene geometrische Form. Dieses Abbildsegment wird durch den vorgeschalteten Separator 100 in Gleich- und Wechselanteil getrennt. Für die nach dem Subtrahierer 150 als mittelwertfreien Wechselanteil erhaltenen, in Fig. 3 ebenfalls als schwarze Bildelemente dargestellten Bilddaten 3 bleibt die geometrische Erscheinungsform dabei unverändert. Für den Gleichanteil ergibt sich dagegen nach dem Dividierer 130 für jedes Segment nur ein einziger, konstanter und ortsunabhängiger Mittelwert 2, der in Fig. 3 durch ein vereinzeltes dunkelgraues Bildelement in der linken oberen Ecke des Bildblocks dargestellt wird. Dieser Mittelwert wird durch den Multiplizierer 310 im Gleichanteil-Skalierer 300 zu dem in Fig. 3 ebenfalls dunkelgrau dargestellten DC-Koeffizienten 5 umdefiniert, wobei sich nur der Wert dieses einen Bildelementes, nicht aber seine Erscheinungsform verändert. Die als Wechselanteil erhaltenen Bilddaten werden parallel dazu durch die formadaptive, 2-dimensionale Transformation in korrespondierende Transformationskoeffizienten überführt, die nach

DE 44 37 827 A1 in dreiecksähnlicher Form im linken oberen Bereich des Blocks angeordnet werden. Dabei liegt dieser Darstellung eine Ausführungsform zugrunde, bei der die eindimensionalen Teiltransformationen erst spaltenweise in vertikale Richtung und anschließend zeilenweise in horizontale Richtung durchgeführt werden. Bei jeder anderen Ausführungsform ergibt sich aber eine vergleichbare Erscheinungsform, so daß die nachfolgenden Erläuterungen auch für diese alternativen Ausführungsformen zutreffend sind.

In einer Schaltungsanordnung aus Fig. 2 wird gemäß der Erfindung derjenige Transformationskoeffizient als ΔDC-Koeffizient 8 bezeichnet, der nach der 2-dimensionalen Transformation im Transformator 200 immer in der linken oberen Ecke des Blockes steht - also das Element des Datensatzes 4, das in Fig. 3 schräg schraffiert dargestellt ist, während der Datensatz 7 mit den restlichen Transformationskoeffizienten des Wechselanteils in Fig. 3 zur Unterscheidung durch hellgraue Bildelemente gekennzeichnet ist. Der Substituierer 420 im Multiplexer 400 ersetzt diesen speziellen ΔDC -Koeffizient 8 durch den DC-Koeffizienten 5 aus dem Gleichanteil-Skalierer 300, so daß sich nach dem Muliplexer 430 für den kodierbaren Datensatz 6 eine Erscheinungsform ergibt, in der der DC-Koeffizient 5 anstelle des ΔDC -Koeffizienten 8 in der linken obere Ecke steht, während die Anordnung der restlichen Transformationskoeffizienten vom Multiplexervorgang unbeeinflußt bleibt.

Bei dem durch den DC-Koeffizienten 5 ersetzten ΔDC-Koeffizienten 8 handelt es sich um denjenigen Transformationskoeffizienten des Wechselanteils, der bei rechteckförmigen Abbildsegmenten 000 mit dem Mittelwert des Wechselanteils korrespondiert und in diesem einfachen Fall definitionsgemäß zu Null wird, da der Wechselanteil per Definition mittelwertfrei ist. In willkürlich geformten Abbildsegmenten 000 weicht dieser spezielle ΔDC -Koeffizient 8 dagegen meist geringfügig, in besonders kritischen Fällen, wie z.B. dreieck- oder kammförmigen Abbildsegmenten, auch erheblich von Null ab. Allerdings weist der ΔDC -Koeffizient 8 in diesen Fällen nur eine systematische Abweichung von Null auf, die ausschließlich von der geometrischen Form des jeweiligen Abbildsegmentes 000 und der Klasse der bei der Transformation verwendeten Basisfunktionen abhängt. Damit enthält der ΔDC -Koeffizient 8 redundante Information, die auf der Wiedergabeseite unter Verwendung der dort verfügbaren Daten und unter Ausnutzung der Tatsache, daß der Wechselanteil per Definition mittelwertfrei sein muß, immer auch wieder rekonstruiert werden kann.

Damit ergibt sich ein wesentliches Merkmal der erfindungsgemäßen Schaltungsanordnung. Durch die im Separator 100 durchgeführte Trennung in Gleich- und Wechselanteil entsteht im Vergleich zur herkömmlichen Schaltungsanordnung DE 44 37 827 A1 eigentlich ein zusätzlicher Koeffizient, der den Gleichanteil repräsentierende DC-Koeffizient 5. Andererseits enthält der Datensatz 4 einen redundanten Koeffizienten, den ΔDC-Koeffizient 8. Dieser Sachverhalt kann, wie in Fig. 3 dargestellt, dazu genutzt werden, den redundanten ΔDV-Koeffizienten 8 während des abschließenden Multiplexvorganges durch den zusätzlich entstandenen DC-Koeffizient 5 zu ersetzen. Dadurch wird der Mehraufwand, der durch den zusätzlichen DC-Koeffizient 5 entsteht, wieder kompensiert und der kodierbare Datensatz enthält wieder genauso viele Koeffizienten wie sie sich bei der herkömmlichen Schaltungsanordnung ergeben hätten.

Allerdings erfordert diese spezielle Form des sendeseitigen Multiplexvorganges auch, daß die wiedergabeseitige Schaltungsanordnung gemäß der Erfindung zusätzlich zu den erforderlichen inversen Signalverarbeitungskomponenten in einer dieser Komponenten noch eine besondere Korrekturschaltung vorsieht, mit der die Störungen, die bei der Rekonstruktion des Abbildes auf der Wiedergabeseite durch eine sendeseitige Vernachläßigung des ΔDC - Koeffizienten 8 verursacht werden, immer wieder korrigiert werden können.

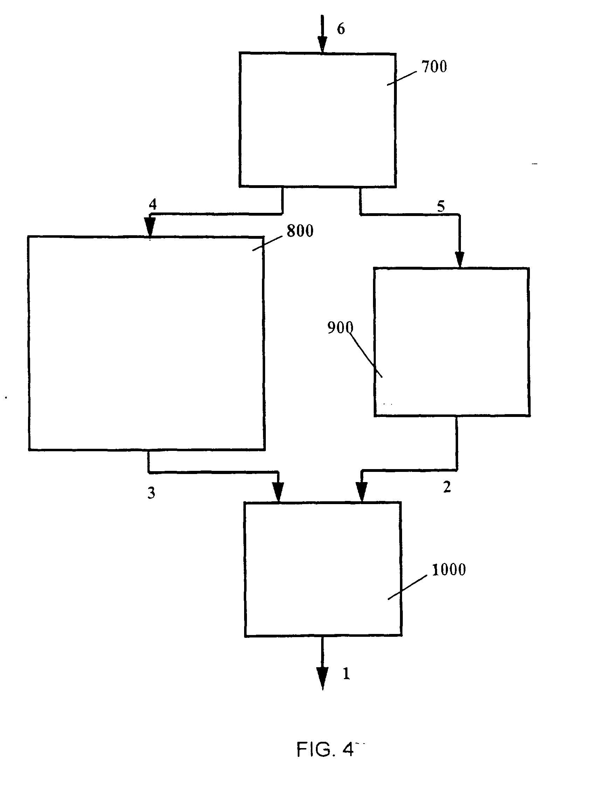

Fig. 4 zeigt das Schaltschema eines Empfängers mit einem Demultiplexer 700, einen inversen Transformator 800, parallel dazu einem inversen Gleichanteil-Skalierer 900 , wobei letztere ausgangsseitig mit einem Integrator 1000 verbunden sind.

Der in Fig. 4 dargestellte Ablaufplan veranschaulicht in einer schematischen Systemübersicht die Untergliederung der wiedergabeseitigen Schaltungsanordnung in vier Signalverarbeitungskomponenten, wobei die einzelnen Komponenten in umgekehrter Reihenfolge zum Ablaufplan der sendeseitigen Schaltungsanordnung aus Fig. 1 angeordnet sind, jede dieser vier Komponenten für den jeweiligen inversen Betrieb ausgelegt ist und im inversen Transformator 800, noch eine zusätzliche Schaltungserweiterung zur Korrektur systematischer Mittelwertschwankungen vorgenommen wird.

Der zu verarbeitende Datensatz 6 besteht dabei in Übereinstimmung mit dem Ablaufplan der sendeseitigen Schaltungsanordnung aus Fig. 1 aus den mit dem ursprünglichen Bilddaten korrespondierenden Transformationskoeffzienten. Im vorgeschalteten Demultiplexer 700 werden die Transformationskoeffizienten aus 6 zunächst über einen internen Demultiplexer wieder in einen in skalierter Form den Gleichanteil repräsentierenden DC-Koeffizienten 5 und einen Datensatz 4 mit den Transformationskoeffizienten des Wechselanteils getrennt, wobei der bei der Übertragung nicht berücksichtigte ΔDC-Koeffizient 8 des Wechselanteils auf einen beliebigen Wert, vorzugsweise aber zu Null gesetzt wird. Die weitere Verarbeitung der separierten Koeffizientensätze erfolgt dann unabhängig im inversen Transformator 800 und im inversen Gleichanteil-Skalierer 900. Im inversen Transformator 800 werden, ausgehend von dem Datensatz 4 über eine inverse zweidimensionale formadaptive Transformation die den Wechselanteil beschreibenden Bilddaten rekonstruiert und in einem entsprechenden Datensatz 3 zusammengefaßt. Diese inverse Transformation erfolgt im wesentlichen auf Grundlage einer zu diesen Zweck in DE 44 37 827 A1 ausführlich beschriebenen inversen Schaltungsanordnung, sieht aber noch eine Schaltungserweiterung zur Korrektur der örtlichen Mittelwertschwankung vor, die dadurch verursacht werden, daß der bei der Übertragung nicht berücksichtigte ΔDC - Koeffizient 8 im Demultiplexer 700 auf einen willkürlichen Wert, vorzugsweise zu Null gesetzt wurde. Im parallelgeschalteten inversen Gleichanteil-Skalierer 900 wird aus dem DC-Koeffizient 5 über eine geeignete inverse Skalierung wieder der den Gleichanteil repräsentierende Mittelwert 2 rekonstruiert. Im abschließenden Integrator 1000 werden diese beiden getrennt rekonstruierten Signalanteile zu einem gemeinsamen Datensatz 1 zusammengefügt, der die vollständig rekonstruierten Bilddaten des ursprünglichen Abbildsegmentes 000 enthält.

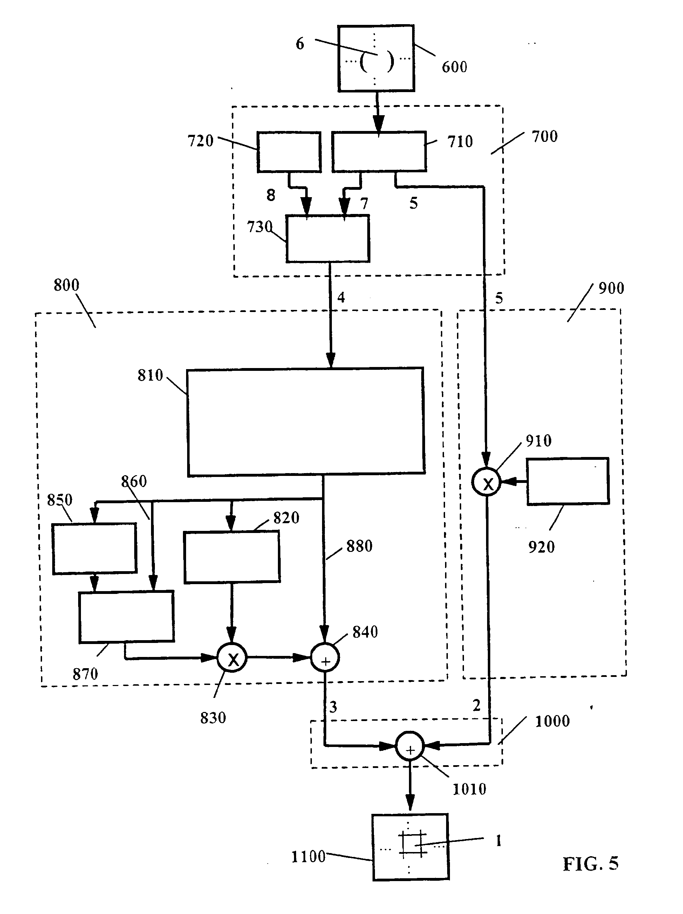

Eine Decodiereinrichtung 600 ist nach Fig. 5 mit dem Demultiplexer 700 verbunden, wobei zunächst ein interner Demultiplexer 710 eingangsseitig angeschlossen ist. Der interne Demultiplexer 710 weist zwei Ausgänge auf, von denen einer an einen internen Multiplexer 730 und der anderer an den inversen Gleichanteil-Skalierer 900 und in ihm zu einem Multiplizierer 910 geführt ist. Der zweite Eingang des internen Multiplexers 730 ist mit dem Ausgang eines Speichers 720 verbunden. Der Ausgang des internen Multiplexers 730 liegt eingangsseitig an einer inversen Transrformationsschaltung 810, deren Ausgänge an einem Zähler 850, einem Korrelator 870, einem Akkumulator 820 sowie an einem Summierer 840 anliegen. Der Ausgang des Zählers 850 ist mit dem zweiten Eingang des Korrelators verbunden, dessen Ausgang am Multiplizierer 830 anliegt. Der Ausgang des Akkumulators 820 ist ebenfalls mit dem Multiplizierer 830 verbunden. Der Ausgang des Multiplizierer liegt am Eingang des Summierers 840 an. Der Ausgang des Summierers 840 ist mit dem Eingang eines Summierers 1010 im Integrator 1000 verbunden, dessen zweiter Eingang mit dem Ausgang eines Multiplizierers 910 im inversen Gleichanteil-Skalierer 900 verbunden ist.

Aus dem in Fig. 5 dargestellten Blockschaltbild der wiedergabeseitigen Schaltungsanordnung gemäß der Erfindung ist zu entnehmen, daß jeder Datensatz 6, der die ein willkürlich geformtes Abbildsegment repräsentierenden Transformationskoeffizienten enthält und in der Regel von einer Decodiereinrichtung 600 zur Verfügung gestellt wird, in einen Datensatz 1 dergestalt zurückgewandelt wird, daß die darin enthaltenen rekonstruierten Daten wieder in ursprünglicher Form auf einem Bildschirm 1100 darstellbar sind.

Im Demultiplexer 700 wird der zu verarbeitende Datensatz 6 zunächst über einen internen Demultiplexer 710 in einen Datensatz 7 mit den übertragenen Transformationskoeffizienten des Wechselanteils einerseits und den in skalierter Form den Gleichanteil repräsentierenden DC-Koeffizienten 5 andererseits getrennt. Danach wird dem Datensatz 7 über einen internen Multiplexer 730 der bei der Übertragung nicht berücksichtigte ΔDC-Koeffizient 8 hinzugefügt, so daß ein vollständiger Datensatz 4 mit allen Transformationskoeffizienten des Wechselanteils entsteht. Dabei wird der Wert des ΔDC-Koeffizienten 8 einem Speicher 720 entnommen, der vorzugsweise den Wert Null enthält, allerdings auch jeden anderen beliebigen Wert aufweisen kann.

Im inversen Transformator 800 wird der die Transformationskoeffizienten des Wechselanteils enthaltende Datensatz 4 über eine inverse zweidimensionale formadaptive Transformationsschaltung 810 in einen entsprechenden Datensatz mit rekonstruierten Bilddaten zurückgewandelt. Dabei wird eine zu diesem Zweck in DE 44 37 827 A1 dargelegte inverse Schaltungsanordnung verwendet. Der aus der inversen Transformationsschaltung 810 resultierende Datensatz wird anschließend in einem mehrfach verzweigten Pfad weiterverarbeitet. Dazu werden in einem Zweig die Werte aller durch die inverse Transformationsschaltung 810 erhaltenen Bilddaten mittels eines Akkumulators 820 aufsummiert, wobei der Akkumulator 820 zu Beginn dieser Operation auf Null zurückgesetzt wird. Sobald alle Daten des durch die Transformation 810 erhaltenen Datensatzes erfaßt sind, muß die im Akkumulator 820 registrierte Gesamtsumme im störungsfreien Fall zu Null werden, da die hier verarbeiteten Bilddaten den rekonstruierten Wechselanteil repräsentieren und dieser Wechselanteil sendeseitig per Definition einen mittelwertfreien Signalanteil darstellt.

Im allgemeinen wird diese Voraussetzung aufgrund der sendeseitigen Vernachläßigung des ΔDC -Koeffizienten 8 nicht erfüllt sein. Die durch den Akkumulator 820 meßbare, nicht systemkonforme Abweichnung von Null kann daher zur Korrektur derjenigen systematischen örtlichen Mittelwertschwankung genutzt werden, die sich durch die sendeseitige Vernachläßigung des ΔDC -Koeffizienten 8 nach der inversen Transformation 810 in dem daraus resultierenden, den Wechselanteil repräsentierenden Datensatz ergeben kann. Zu diesem Zweck wird die im Akkumulator 820 registrierte Gesamtsumme über den Multiplizier 830 mit einem positionsabhängigen Faktor gewichtet und dieser gewichtete, positionsabhängige Korrekturterm über den Addierer 840 auf den Wert desjenigen Bildelementes aufaddiert, das sich innerhalb des willkürlich geformten Abbildsegmentes genau an der örtlichen Position befindet, auf die sich der zuvor ermittelte Multiplikationsfaktor bezieht. Die entsprechenden Bilddaten werden dem Addierer 840 zu diesem Zweck über eine schlichte, ggf. zwecks Rechenzeitkompensation mit einem Verzögerungsglied versehenen Verbindungsleitung 880 zugeführt.

Die Ermittlung der hierzu benötigten, positionsabhängigen Multiplikationsfaktoren erfolgt in einem parallelen Zweig, der zu diesem Zweck eine Reihenschaltung aus einem verzweigten Pfad, bestehend aus einem Zählwerk 850 und einer schlichten, ggf. zwecks Rechenzeitkompensation mit einem Verzögerungsglied versehenen Verbindungsleitung 860, sowie einem nachgeschalteten Korrelator 870 aufweist. Das Zählwerk 850 ermittelt dabei für jede Spalte i des willkürlich geformten Abbildsegmentes die darin enthaltene Anzahl an Bildelementen Nᵢ. Anschließend wird in Abhängigkeit von allen zuvor ermittelten Spaltenparametern Ni sowie der örtlichen Position des jeweiligen zu korrigierenden Bildelementes eine Adressierung des Korrelators 870 vorgenommen. Die örtliche Position des aktuell zu verarbeitenden Bildelementes wird dem Korrelator dabei über die Verbindungsleitung 860 zugeführt. Über die Adressierung des Korrelators wird dann der für die Korrektur des jeweiligen Bildelementes benötigte Multiplikationsfaktor ausgewählt.

Nach vollständiger Korrektur der systematischen örtlichen Mittelwertschwankung steht am Ausgang des inversen Transformators 800 ein Datensatz 3 mit den rekonstruierten, den Wechselanteil repräsentierenden Bilddaten zur Verfügung. Durch die zuvor durchgeführte Korrektur ist sichergestellt, daß die durch eine sendeseitige Vernachläßigung des redundanten ΔDC -Koeffizienten verursachten Störungen behoben und die in 3 enthaltenen Bilddaten in der Regel wieder mittelwertfrei sind.

Parallel zu der inversen zweidimensionalen formadaptiven Transformation und eine damit verbundenen Korrektur möglicher systematischer örtlicher Mittelwertschwankungen wird im inversen Gleichanteil-Skalierer 900 der zuvor im Demultiplexer 700 von den übertragenen Transformationskoeffizienten separierte und in skalierter Form den Gleichanteil repräsentierende DC-Koeffizient 5 über eine Multiplizierer 910 und einen inversen Skalierungsfaktor 920, dergestalt umdefiniert, daß der durch die Multiplikation erhaltene Wert wieder einen den Gleichanteil repräsentierenden Mittelwert 2 darstellt, der zu den rekonstruierten Wechselanteil im Datensatz 3 paßt. Der der dazu benötigte Skalierungsfaktor 920 ergibt sich aus einer Inversion des entprechenden, sendeseitigen Skalierungsfaktors 320 in Fig. 2.

Die rekonstruierten Signalanteile werden dann abschließend im Integrator 1000 wieder zu einem gemeinsamen Datensatz 1 zusammengefügt. Hierzu verwendet der Integrator 1000 einen einfachen Addierer 1010, mit dem der rekonstruierte, den Gleichanteil repräsentierende Mittelwert 2 auf alle im Datensatz 3 enthaltenen, den Wechselanteil repräsentierenden Bilddaten aufaddiert wird. Solange der im Dekodierer 600 dekodierte Datensatz 6 und die darin enthaltenen Transformationskoeffzienten verlustfrei codiert und übertragen werden und folglich genau den Daten am Ausgang des Kodierers 400 in Fig. 2 entsprechen, lassen sich auch die Bilddaten exakt rekonstruieren. In diesem Fall entspricht der finale Datensatz 1 in Fig. 5 genau dem initialen Datensatz 1 in Fig. 2. Dies gilt insbesondere auch, obwohl der ΔDC -Koeffizient 8 des Wechselanteils bei der Übertragung nicht berücksichtigt wird, auf der Wiedergabeseite deshalb nicht zur Verfügung steht und die dadurch bei der inversen zweidimensionalen formadaptiven Transformation verursachten Störungen auf der Wiedergabeseite korregiert werden müssen.

In den vorstehenden Erläuterungen ist, wenn auch nicht ausdrücklich erwähnt, vorausgesetzt, daß die zweidimensionale Transformation im Transformator 200 in Fig. 1 bzw. 2 bei der Verarbeitung willkürlich geformter Bildsegmente die dazugehörigen Informationen über die Seamentform für die Rekonstruktion des Bildes auf der wiedergabeseite bereitstellt. Diese Informationen sind also in die aufzuzeichnenden bzw. zu übertragenden transformationskodierten digitalen Bilddaten zu integrieren und erfordern geringfügige zusätzliche Bandbreite. Sie werden auf der Wiedergabeseite sowohl für die inverse zweidimensionale formadaptive Transformation 810 als auch für die nachfolgenden Korrekturschaltung sowie , im Falle einer adaptiven Skalierung des Gleichanteils, auch für die Bestimmung des inversen Skalierungsfaktors 920, benötigt.

Ferner ist hinsichtlich der in den vorstehenden Erläuterungen erwähnten, spaltenweisen Organisation des Zählwerkes 850 vorausgesetzt, daß die eindimensionalen Teiltransformationen der sende- und wiedergabeseitigen zweidimensionalen formadaptiven Transformationen des Transformators 200 in Fig. 2 bzw. der inversen Transformationsschaltung 810 in Fig. 5 in der gleichen Reihenfolge durchgeführt werden wie in DE 44 37 827 A1 für eine bevorzugten Ausführungsform dargelegt; d.h. in der sendeseitigen Transformation werden erst die Spalten in vertikale und dann die Zeilen in horizontale Richtung transformiert und, umgekehrt, in der wiedergabeseitigen Transformation werden erst die Zeilen in horizontale und dann die Spalten in vertikale Richtung zurücktransformiert. Sofern diese Reihenfolge der Teiltransformationen im Transformator 200 und in der inversen Transformationsschaltung 810 vertauscht wird - was ohne Einschränkung der Leistungsfähigkeit der Schaltungsanordnung möglich ist - ändert sich auch die Organisation des Zählwerkes 850. In diesem Fall ist anstatt der Anzahl der in jeder Spalte enthaltenen Bildelemente die Anzahl der in jeder Zeile enthaltenen Bildelemente zu bestimmen; d.h. die spaltenweise Organisation des Zählwerks 850 ist in diesem Fall in eine zeilenweise auszutauschen.

Sowohl die positionsabhängigen Multiplikationsfaktoren, die im Korrelator 870 in Abhängigkeit von den Spalten- bzw. Zeilenparametern Ni und der jeweiligen Position des zu korrigierenden Bildelementes ausgewählt werden, als auch der im inversen Gleichanteil-Skalierer 900 verwendete Skalierungsfaktor 920, hängen zudem von der jeweiligen Klasse der Basisfunktionen ab, die in den zweidimensionalen Transformationen verwendet werden. Die vorangegangenen Erläuterungen gehen davon aus, daß in allen Bildsegmenten immer die gleiche Klasse von Basisfunktionen eingesetzt wird (z.B. immer die Basisfunktionen einer orthonormalen DCT). Wird die Klasse von Basisfunktionen dagegen von Segment zu Segment variiert, sind auch die über den Korrelator 870 auszuwählenden Multiplikationsfaktoren sowie der Skalierungsfaktor 920 entsprechend zu adaptieren. Die Anzahl der im Korrelator 870 enthaltenen Einträge hängt zudem von der jeweiligen maximalen Größe der zu verarbeitenden Abbildsegmente ab. Im Fall einer maximalen Blockgrösse von 8 x 8 Bildelementen benötigt der Korrelator 870 bereits 512 Einträge. Bei variabler maximaler Blockgrösse ist allerdings auch diese Anzahl der Korrelatoreinträge und der damit verbundenen Speicherbedarf entsprechend anzupassen. Bei einigen Klassen von Basisfunktionen, wie z.B. der orthonormalen DCT, besteht allerdings ein eindeutig definierter, algorithmischer Zusammenhang zwischen den Eingangsgrössen des Korrelators 870, d.h. den Spalten- bzw. Zeilenparametern Ni und der örtlichen Position des zu korrigierenden Bildelements, und dem in Abhängigkeit von diesen Eingangsgrössen auszuwählenden Multiplikationsfaktor, so daß der Korrelator 870 in diesem Fall zwecks einer Speicherplatzreduzierung immer auch durch ein arithmetisches Rechenwerk ersetzt werden kann.

Des weiteren läßt sich die im inversen Transformator 800 enthaltene Korrekturschaltung in entsprechend abgewandelter Form auch in die inversen zweidimensionalen Transformationsschaltung 810 integrieren. Die in Fig. 5 dargestellte Anordnung stellt nur insofern eine besonders günstige Ausführungsform dar, da sie nicht in die vorhandene Schaltungsanordnung gemäß DE 44 37 827 A1 eingreift; d.h. keine Modifikation der bereits bestehenden Schaltungsanordnung vorgenommen werden muß. Sofern aber ein Eingriff in die bestehende Schaltungsanordnung gemäß DE 44 37 827 A1 möglich ist oder sich sogar als vorteilhaft erweist, kann eine entsprechende Korrektur alternativ auch direkt nach derjenigen inversen eindimensionalen Teiltransformation vorgenommen werden, die u.a. auch auf den bei der Übertragung nicht berücksichtigten und deshalb über den Speicher 720 auf einen willkürlichen Wert gesetzten ΔDC-Koeffzienten 8 des Wechselanteils zugreift (d.h., je nach Ausführungsform der Schaltungsanordnung aus DE 44 37 827 A1, diejenige eindimensionale Teiltransformation, die auf die obere Zeile bzw. die linke Spalte in Darstellung 200 des Schaubildes in Fig. 3 zugreift). Zu diesem Zweck ist die in Fig. 5 aus einem Zählwerk 850, einem Korrelator 870, einer schlichten Verbindungsleitung 860, einem Akkumulator 820, einem Multiplizierer 830, einem Addierer 840 und einer weiteren Verbindungsleitung 880 bestehende Korrekturschaltung in die inverse zweidimensionale Transformationsschaltung 810 zu integrieren und in vergleichbarer Weise auf alle aus dieser oben erwähnten, speziellen eindimensionalen Teiltransformation resultierenden Werte anzuwenden, bevor mit den restlichen Teiltransformationen, wie in DE 44 37 827 dargelegt, fortgefahren werden kann. Hierzu werden alle aus der Teiltransformation resultierenden Werte in einem Akkumulator aufsummiert, über ein Zählwerk die oben erwähnten Spalten- bzw. Zeilenparameter Ni bestimmt, in Abhängigkeit von diesen Parametern über einen Korrelator bzw. ein ihn ersetzendes Rechenwerk ein korrespondierender Multiplikationsfaktor ausgewählt, die im Akkumulator registrierte Gesamtsumme mit diesem Faktor multipliziert und der daraus resultierende Korrekturterm auf alle aus der zuvor erwähnten Teiltransformation resultierenden Werte aufaddiert. Im Vergleich zu der in Fig.5 dargestellten Ausführungsform kommt die hier beschriebene Variante mit nur einem konstanten Multiplikationsfaktor und entsprechend auch nur mit einem konstanten Korrekturterm aus. Diese führt zu einer deutlichen Aufwandsreduzierung der Korrekturschaltung, setzt aber eine Modifikation der wiedergabeseitigen bekannten Schaltungsanordnung voraus.

Eine weitere Alternative, die ähnlich zu der in Fig. 5 dargestellten Ausführungsform nicht in die Schaltungsanordnung DE 44 37 827 eingreift, bietet sich, wenn man die Korrekturschaltung nicht zu der inversen zweidimensionalen Transformationsschaltung 810 in Reihe schaltet, sondern die Korrektur im Demultiplexer 700 zwischen dem Speicher 720 und dem internen Multiplexer 730 ausführt, d.h. man rekonstruiert den über Speicher 720 auf einen willkürlichen Wert gesetzten ΔDC -Koeffzienten 8 gleich zu Beginn direkt vor dem internen Multiplexer 730 und damit auch vor Durchführung der eigentliche inversen Transformation. Ein solche Variante erfordert neben der Korrekturschaltung aber auch eine zusätzliche Implementierung der oben erwähnten, speziellen, auf den ΔDC -Koeffzienten 8 zugreifenden inversen eindimensionalen Teiltransformation; d.h. in dieser Ausführungsvariante muß diese Teiltransformation in zweifacher Ausführung exisitieren und zweimal durchlaufen werden, einmal zu Korrekturzwecken vor der Transformation und einmal während der eigentlichen Transformation. Die Korrektur erfolgt dann ähnlich wie bei der zuvor beschriebenen, in die Transformation integrierte Variante. Die aus der speziellen eindimensionalen Teiltransformation resultierenden Werte werden im Akkumulator aufsummiert und die dabei enstehende Gesamtsumme über einen Multiplizierer mit einem konstanten Faktor gewichtet, der zuvor über einen Korrelator bzw. ein ihn ersetzendes Rechenwerk in Abhängigkeit von den im Zählwerk ermittelten Spalten- bzw. Zeilenparametern Ni ausgewählt wird. Im Gegensatz zu den bisherigen Ausführungsformen wird der so ermittelte Wert hier allerdings nicht als additiver Korrekturterm verwendet, sondern über einen Skalierungsfaktor so umdefiniert, daß sich daraus eine rekonstruierter ΔDC -Koeffzienten 8 ergibt, der dann zusammen mit den restlichen Transformationskoeffizienten einen vollständig rekonstruierten Eingabedatensatz 4 für die nachfolgende Transformationschaltung 810 bildet. Der Skalierungsfaktor ist dabei aus der Anzahl der Koeffizienten, auf die die oben erwähnte spezielle inverse eindimensionale Teiltransformation angewendet wird, abzuleiten.

Alle zuvor erläuterten Einzelheiten gelten sowohl bezüglich der Luminanz als auch der Chrominanz von Fernsehsignalen oder dgl. Für Farbfernsehsignale können sowohl drei parallele Strecken der Signalverarbeitungskomponenten 100, 200, 300 und 400 einerseits bzw. 700, 800, 900 und 1000 andererseits als auch entsprechend sequentielle Strecken vorgesehen sein. Der Grad der sequentiellen Mehrfachausnutzung einzelner Komponenten der Schaltungsanordnungen ist abhängig vom Zeitversatz zwischen Aufnahme und Wiedergabe zur Verfügung steht.

## Patentansprüche

1. Schaltungsanordnung für eine Bildübertragung, die mit vorzugsweise orthonormalen Basisfunktionen korrelierte Transformationskoeffizienten für transformationskodierte digitale Bilddaten verwendet, wobei ein Bild mittels Bildelementen aufgebaut ist, die zwecks segmentadaptiver zweidimensionaler orthonormaler Transformation in Blöcken variabler Größe organisiert sind und Informationen über Helligkeit und deren Änderung im Vergleich zu umgebenden Bildelementen in Form von Gleich- und Wechselanteil enthalten, wobei eine Reihenschaltung aus einem vorgeschalteten Separierer (100) für Gleich- und Wechselanteil der Bildelemente, einem Transformator (200) für den Wechselanteil, einem dazu parallelgeschalteten Skalierer (300) für den Gleichanteil und einem nachgeschalteten Multiplexer (400) vorgesehen ist, wobei der Skalierungsfaktor des Skalierers (300) derart umdefiniert wird, dass er zum Wertebereich der Transformationskoeffizienten des Wechselanteils passt, wobei jener Transformationskoeffizient (8) des Wechselanteils, der mit dem Mittelwert des Wechselanteils korrespondiert, durch den Gleichanteil-Koeffzienten des zuvor mittels des Skalierers (300) umdefinierten Gleichanteil-Koeffizienten (5) ersetzt wird und wobei die restlichen Transformationskoeffizienten vom Multiplexvorgang unbeeinflusst bleiben.

2. Schaltungsanordnung für eine Bildübertragung nach Anspruch 1, **dadurch gekennzeichnet, dass**
a): der vorgeschaltete Separierer (100) zwecks segmentadaptiver Separation der zu verarbeitenden Bilddaten in Gleich- und Wechselanteil einen verzweigten Pfad mit einer Verbindungsleitung (140) in einem ersten Zweig, einem Akkumulator (110) in einem zweiten Zweig, einem Zähler (120) in einem dritten Zweig sowie einen den Gleichanteil liefernden Dividierer (130) im einem ersten Verzweigungspunkt und einen den Wechselanteil liefernden Subtrahierer (150) in einem zweiten Verzweigungspunkt aufweist und
b) der Transformator (200) eine Schaltungsanordnung zur Codierung beliebig geformter Bildsegmente zwecks zweidimensionaler, formadaptiver, vorzugsweise orthonormale Basisfunktionen verwendender Transformation der als mittelwertfreier Wechselanteil erhaltenen Daten aufweist; und
c) der parallelgeschaltete Skalierer (300) zwecks Skalierung des Gleichanteils einen Multiplizierer (310) und einen den Skalierungsfaktor bereitstellenden Speicher (320) aufweist und
d): der nachgeschaltete Multiplexer (400) zwecks Zusammenfügung der für die Rekonstruktion von Gleich- und Wechselanteil relevanten Daten zu einem gemeinsamen, kodierbaren Datensatz eine Reihenschaltung aus einem internen Demultiplexer (410), einem Substituierer (420) und einem Multiplexer (430) aufweist.

3. Schaltungsanordnung nach Anspruch 1 oder 2, **dadurch gekennzeichnet, dass** für eine Signalverarbeitung in inverse Richtung eine Reihenschaltung aus einer vor-, zwei parallel- und einer nachgeschalteten Komponente (700, 800, 900, 1000) vorgesehen ist, wobei:
a) ein Demultiplexer (700) zwecks Separation des zu verarbeitenden Koeffizientensatzes in die jeweiligen, den Gleich- bzw. den Wechselanteil repräsentierenden Koeffizienten einen internen Demultiplexer (710) sowie zwecks Vervollständigung des den Wechselanteil repräsentierenden Koeffizientensatzes einen willkürlich initialisierten, vorzugsweise zu Null gesetzten Speicher (720) und einen Multiplexer (730) aufweist; und
b) ein inverser Transformator (800) mit einer Schaltungsanordnung (810) zur Codierung beliebig geformter Bildsegmente zwecks zweidimensionaler, formadaptiver Rücktransformation des den Wechselanteil repräsentierenden Koeffizientensatzes und, dazu in Reihe geschaltet, zwecks Korrektur einer systematischen örtlichen Mittelwertschwankung einen mehrfach verzweigten Pfad mit eine Reihenschaltung, bestehend aus
b1) : einem weiteren verzweigten Pfad mit einem Zählwerk (850) in dem einen Zweig und einer Verbindungsleitung (860) in dem andern Zweig und
b2): einem positionsabhängige Multiplikationsfaktoren bereitstellenden Korrelator (870), in einem ersten Zweig, einen Akkumulator (820) in einem zweiten Zweig und einer Verbindungsleitung (880) in einem dritten Zweig sowie einen positionsabhängige, additive Korrekturterme liefernder Multiplizierer (830) in einem ersten Verzweigungspunkt und ein die positionsabhängige, additive Korrektur durchführenden Addierer (840) in zweiten Verzweigungspunkt aufweist; und
c) ein inverser Skalierer (900) zwecks inverser Skalierung des einen, den Gleichanteil repräsentierenden Koeffizienten einen Multiplizierer (910) und einen den inversen Skalierungsfaktor bereitstellenden Speicher (920) aufweist; und
d): ein nachgeschalteter Integrator (1000) zwecks Zusammenfügung der separat rekonstruierten Gleich- und Wechselanteile einen einfachen Addierer (1010) aufweist.

4. Schaltungsanordnung nach Anspruch 3, **dadurch gekennzeichnet, dass** die im inversen Transformator (800) vorgesehene, aus einem Zählwerk (850), einer Verbindungsleitung (860), einem Korrelator (870), einen Akkumulator (820), einen Multiplizierer (830), einem Addierer (840) und einer zweiten Verbindungsleitung (880) bestehende Korrekturschaltung in die zweidimensionalen formadaptiven Rücktransformation (810) integriert wird und dabei in geringfügig abgewandelter Form auf die Werte angewendet wird, die aus derjenigen inversen eindimensionalen Teiltransformation resultieren, die u.a. auch auf den in dem vorgeschalteten Demultiplexer (700) in dem dort vorhandenen Speicher (720) willkürlich gesetzten Koeffizienten zugreift, und erst nach dieser Korrektur mit der noch verbleibenden Signalverarbeitung fortgefahren wird.

5. Schaltungsanordnung nach Anspruch 3, **dadurch gekennzeichnet, dass** die im inversen Transformator (800) vorgesehene, aus einem Zählwerk (850), einer Verbindungsleitung (860), einem Korrelator (870), einen Akkumulator (820), einen Multiplizierer (830), einem Addierer (840) und einer zweiten Verbindungsleitung (880) bestehende Korrekturschaltung im vorgeschalteten Demultiplexer (700) zwischen dem dort vorhandenen, willkürlich initialisierten Speicher (720) und dem nachfolgenden Multiplexer (730) ausgeführt wird und zu diesem Zweck die eine inverse eindimensionale Teiltransformation, die in dem inversen Tansformator (800) durchzuführenden, zweidimensionalen formadaptiven Rücktransformation (810) u.a. auch auf den über den zuvor genannten Speicher (720) willkürlich gesetzten Koeffizienten zugreift, dort in separater Ausführung nochmals zur Verfügung steht und die Korrekturschaltung auf die aus dieser Teiltransformation resultierenden Werte angewendet wird und dabei so ausgelegt wird, dass der über den zuvor genannten Speicher (720) willkürlich gesetzte Koeffizient durch die Korrekturschaltung vollständig rekonstruiert wird.

6. Schaltungsanordnung nach einem der Ansprüche 3 bis 5, **dadurch gekennzeichnet, dass** der im inversen Transformator (800) verwendete, zu Korrekturzwecken positionsabhängige Multiplikationsfaktoren bereitstellende Korrelator (870) zwecks eine Speicherplatzreduzierung vollständig oder teilweise durch eine adequates arithmetisches Rechenwerk ersetzt wird.

7. Schaltungsanordnung nach einem der Ansprüche 1 bis 6, **dadurch gekennzeichnet, dass** die Schaltungskomponenten auf eine Organisation der Bildelemente in rechteckigen oder quadratischen Blöcken ausgelegt sind.

8. Schaltungsanordnung nach einem der Ansprüche 1 bis 7, **dadurch gekennzeichnet, dass** für die Verarbeitung von Luminanz- und Chrominanzdaten der Bildelemente eine Parallelschaltung mehrerer Schaltungsanordnung vorgesehen ist.

## Claims

1. Circuit arrangement for image transmission which uses transform coefficients correlated with preferably orthonormal basis functions for transform-coded digital image data, an image being constructed by means of pixels which are organized in blocks of variable size for the purpose of segment-adaptive two-dimensional orthonormal transformation and contain information about the brightness and the change thereof in comparison with surrounding pixels in the form of DC and AC components, provision being made of a series circuit comprising an upstream separator (100) for DC and AC components of the pixels, a transformer (200) for the AC component, a scaler (300) for the DC component in parallel with said transformer, and a multiplexer (400) connected downstream, the scaling factor of the scaler (300) being redefined in such a way that it matches the range of values of the transform coefficients of the AC component, that transform coefficient (8) of the AC component which corresponds to the mean value of the AC component being replaced by the DC component coefficient of the DC component coefficient (5) previously redefined by means of the scaler (300), and the rest of the transform coefficients remaining unaffected by the multiplex operation.

2. Circuit arrangement for image transmission according to Claim 1, **characterized in that**
a) the upstream separator (100) for the purpose of segment-adaptive separation of the image data to be processed into DC and AC components has a branched path with a connecting line (140) in a first branch, an accumulator (110) in a second branch, a counter (120) in a third branch and also a divider (130) that supplies the DC component at a first branching point and a subtractor (150) that supplies the AC component at a second branching point, and
b) the transformer (200) has a circuit arrangement for coding arbitrarily shaped image segments for the purpose of two-dimensional, shape-adaptive transformation - which preferably uses orthonormal basis functions - of the data obtained as mean-value-free AC component; and
c) the scaler (300) connected in parallel for the purpose of scaling the DC component has a multiplier (310) and a memory (320) that provides the scaling factor and
d) the multiplexer (400) connected downstream for the purpose of combining the data relevant to the reconstruction of DC and AC components to form a common, codable data set has a series circuit comprising an internal demultiplexer (410), a substitutor (42) and a multiplexer (430).

3. Circuit arrangement according to Claim 1 or 2, **characterized in that** a series circuit comprising an upstream component (700), two components (800, 900) connected in parallel and a component (1000) connected downstream is provided for signal processing in the inverse direction, in which case;
a) a demultiplexer (700), for the purpose of separating the coefficient set to be processed into the respective coefficients representing the DC component and the AC component, has an internal demultiplexer (710) and, for the purpose of completing the coefficient set representing the AC component, has a memory (720) that is arbitrarily initialized and is preferably set to zero and a multiplexer (730); and
b) an inverse transformer (800) has a circuit arrangement (810) for coding arbitrarily shaped image segments for the purpose of two-dimensional, shape-adaptive inverse transformation of the coefficient set representing the AC component and, connected in series therewith, for the purpose of correcting a systematic local mean value fluctuation, a multiply branched path with a series circuit comprising
b1): a further branched path with a counting mechanism (850) in one branch and a connecting line (860) in the other branch,
b2): a correlator (870) providing position-dependent multiplication factors, in a first branch, an accumulator (820) in a second branch and a connecting line (880) in a third branch and also a multiplier (830) that supplies position-dependent, additive correction terms at a first branching point and an adder (840) that carries out the position-dependent, additive correction at a second branching point; and
c) an inverse scaler (900) for the purpose of inversely scaling one coefficient representing the DC component has a multiplier (910) and a memory (920) that provides the inverse scaling factor; and
d) an integrator (1000) connected downstream for the purpose of combining the separately reconstructed DC and AC components as a simple adder (1010).

4. Circuit arrangement according to Claim 3, **characterized in that** the correction circuit that is provided in the inverse transformer (800) and comprises a counting mechanism (850), a connecting line (860), a correlator (870), an accumulator (820), a multiplier (830), an adder (840) and a second connecting line (880) is integrated into the two-dimensional shape-adaptive inverse transformation (810) and in this case is applied in slightly modified form to the values which result from that inverse one-dimensional partial transformation which inter alia also accesses the coefficients that are arbitrarily set in the upstream demultiplexer (700), in the memory (720) present there, and the remaining signal processing is continued only after this correction.

5. Circuit arrangement according to Claim 3, **characterized in that** the correction circuit that is provided in the inverse transformer (800) and comprises a counting mechanism (850), a connecting line (860), a correlator (870), an accumulator (820), a multiplier (830), an adder (840) and a second connecting line (880) is implemented in the upstream demultiplexer (700) between the arbitrarily initialized memory (720) present there and the downstream multiplexer (730) and, for this purpose, the one inverse one-dimensional partial transformation which in the inverse transformer (800) to be carried out two-dimensional shape-adaptive inverse transformation (810) inter alia also accesses the coefficient set arbitrarily by means of the abovementioned memory (720) is again available there in separate implementation, and the correction circuit is applied to the values resulting from this partial transformation and in this case is designed in such a way that the coefficient set arbitrarily by means of the abovementioned memory (720) is completely reconstructed by the correction circuit.

6. Circuit arrangement according to one of Claims 3 to 5, **characterized in that** the correlator (870) that is used in the inverse transformer (800) and provides position-dependent multiplication factors for correction purposes, for the purpose of reducing memory space, is completely or partially replaced by an adequate arithmetic logic unit.

7. Circuit arrangement according to one of Claims 1 to 6, **characterized in that** the circuit components are designed for organization of the pixels in rectangular or square blocks.

8. Circuit arrangement according to one of Claims 1 to 7, **characterized in that** a parallel circuit comprising a plurality of circuit arrangements is provided for the processing of luminance and chrominance data of the pixels.

## Revendications

1. Circuit pour une transmission d'image qui utilise des coefficients de transformation corrélés à des fonctions de base de préférence orthonormales pour des données numériques d'image codées par une transformation, dans lequel
- une image est structurée au moyen d'éléments d'image organisés par blocs de grandeur variable, en vue d'une transformation orthonormale bidimensionnelle adaptative au segment, et qui contiennent des informations, sous forme d'une partie continue et d'une partie alternative, sur la luminosité et sa variation comparativement aux éléments d'image environnants,
- un montage en série est composé d'un séparateur monté en amont (100) pour la partie continue et la partie alternative des éléments d'image, d'un transformateur (200) pour la partie alternative, d'un dispositif de mise à l'échelle monté en parallèle (300) pour la partie continue et d'un multiplexeur monté en aval (400),
- le facteur de mise à l'échelle du dispositif de mise à l'échelle (300) est redéfini de telle façon qu'il est adapté à la gamme de valeurs des coefficients de transformation de la partie alternative, chaque coefficient de transformation (8) de la partie alternative, qui correspond à la valeur moyenne de la partie alternative, étant remplacé par le coefficient de partie continue du coefficient de partie continue (5) redéfini précédemment au moyen du dispositif de mise à l'échelle (300), alors que les coefficients de transformation restants ne sont pas influencés par l'opération de multiplexage.

2. Circuit pour une transmission d'image selon la revendication 1,
**caractérisé en ce que**
a) le séparateur monté en amont (100) en vue de la séparation, adaptative au segment, des données d'image à traiter en une partie continue et une partie alternative, présente un trajet ramifié avec une ligne de liaison (140) dans une première ramification, un accumulateur (110) dans une deuxième ramification, un compteur (120) dans une troisième ramification, ainsi que, dans un premier point de ramification, un diviseur (130) fournissant la partie continue et, dans un deuxième point de ramification, un soustracteur (150) fournissant la partie alternative, et
b) le transformateur (200) présente un circuit pour le codage de segments d'image formés de façon quelconque, en vue de la transformation bidimensionnelle, adaptative aux formes, utilisant de préférence des fonctions de base orthonormales, des données obtenues en tant que partie alternative sans valeur moyenne ; et
c) le dispositif de mise à l'échelle monté en parallèle (300) présente, en vue de la mise à l'échelle de la partie continue, un multiplicateur (310) et une mémoire (320) fournissant le facteur de mise à l'échelle, et
d) le multiplexeur monté en aval (400) présente, en vue de la réunion des données utiles pour la reconstitution de la partie continue et de la partie alternative en un ensemble de données commun, codable, un circuit en série composé d'un démultiplexeur interne (410), d'un dispositif de substitution (420) et d'un multiplexeur (430).

3. Circuit selon la revendication 1 ou 2,
**caractérisé en ce que**
pour un traitement du signal en sens inverse, on prévoit un circuit en série constitué d'un composant monté en amont, de deux composants montés en parallèles et d'un composant monté en aval (700, 800, 900, 1000), et :
a) un démultiplexeur (700) présente un démultiplexeur interne (710), en vue de la séparation de l'ensemble de coefficients à traiter en coefficients correspondants représentant la partie continue et la partie alternative, ainsi qu'une mémoire initialisée arbitrairement (720), de préférence mise à zéro, et un multiplexeur (730) en vue de compléter l'ensemble de coefficients représentant la partie alternative, et
b) un transformateur inverse (800) avec un circuit (810) pour le codage de segments d'image formés de façon quelconque, en vue de la retransformation bidimensionnelle, adaptative aux formes, de l'ensemble de coefficients représentant la partie alternative et, monté en série par rapport à celle-ci, en vue de la correction d'une variation locale systématique de la valeur moyenne, un trajet ramifié plusieurs fois avec un circuit en série constitué :
b1) d'un autre trajet ramifié avec un compteur (850) dans une ramification et une ligne de liaison (860) dans l'autre ramification, et
b2) d'un corrélateur (870) dans une première ramification, fournissant des facteurs de multiplication en fonction de la position, d'un accumulateur (820) dans une deuxième ramification et d'un ligne de liaison (880) dans une troisième ramification ainsi que d'un multiplicateur (830) fournissant des termes de correction additifs, en fonction de la position, dans un premier point de ramification, et d'un totaliseur (840) exécutant la correction additive, en fonction de la position, dans un deuxième point de ramification ; et
c) un dispositif inverse de mise à l'échelle (900) présente, en vue de la mise à l'échelle inverse d'un coefficient représentant la partie continue, un multiplicateur (910) et une mémoire (920) fournissant le facteur inverse de mise à l'échelle ; et
d) un intégrateur monté en amont (1000) présente, en vue de la réunion de la partie continue et de la partie alternative reconstituées séparément, un totaliseur simple (1010).

4. Circuit selon la revendication 3,
**caractérisé en ce que**
le circuit de correction prévu dans le transformateur inverse (800), composé d'un compteur (850), d'une ligne de liaison (860), d'un corrélateur (870), d'un accumulateur (820), d'un multiplicateur (830), d'un totaliseur (840) et d'une deuxième ligne de liaison (880), est intégré dans la retransformation (810) bidimensionnelle adaptative aux formes et est appliqué sous forme légèrement modifiée aux valeurs qui résultent de la transformation partielle inverse unidimensionnelle qui accède entre autres aux coefficients fixés arbitrairement dans le démultiplexeur monté en amont (700), dans la mémoire (720) présente dans celui-ci, et se poursuit par le traitement restant du signal seulement après cette correction.

5. Circuit selon la revendication 3,
**caractérisé en ce**
**que** le circuit de correction prévu dans le transformateur inverse (800), composé d'un compteur (850), d'une ligne de liaison (860), d'un corrélateur (870), d'un accumulateur (820), d'un multiplicateur (830), d'un totaliseur (840) et d'une deuxième ligne de liaison (880), est réalisé dans le démultiplexeur monté en amont (700) entre la mémoire initialisée arbitrairement (720) présente dans celui-ci et le multiplexeur suivant (730), et dans ce but, une transformation partielle inverse unidimensionnelle, la retransformation (810) bidimensionnelle adaptative aux formes à exécuter dans le transformateur inverse (800), accède entre autres aussi aux coefficients fixés arbitrairement par la mémoire (720) susmentionnée, est à nouveau disponible dans celle-ci en version séparée, et le circuit de correction est appliqué aux valeurs résultant de cette transformation partielle et est alors conçu de telle façon que le coefficient fixé arbitrairement par la mémoire susmentionnée (720) est complètement reconstitué par le circuit de correction.

6. Circuit selon l'une quelconque des revendications 3 à 5,
**caractérisé en ce que**
le corrélateur (870) utilisé dans le transformateur inverse (800), fournissant des facteurs de multiplication en fonction de la position pour des buts de correction, est remplacé, en vue d'une réduction de la place de la mémoire, complètement ou partiellement par une unité de calcul arithmétique adéquate.

7. Circuit selon l'une quelconque des revendications 1 à 6,
**caractérisé en ce que**
les composants du circuit sont conçus en une organisation des éléments d'image en blocs rectangulaires ou carrés.

8. Circuit selon l'une quelconque des revendications 1 à 7,
**caractérisé par**
un montage en parallèle de plusieurs circuits pour le traitement des données de luminance et de chrominance des éléments d'image.
